# NEUE EUROPÄISCHE PATENTSCHRIFT

(11) **EP 0 180 824 B2**
(45) Veröffentlichungstag und Bekanntmachung des Hinweises auf die Entscheidung über den Einspruch: **23.02.1994**
(45) Hinweis auf die Patenterteilung: 04.04.1990
(21) Anmeldenummer: 85113106.0
(22) Anmeldetag: 16.10.1985
(51) Int. Cl.: F16L 21/06

(54) **Vorrichtung zur abgedichteten Verbindung von zwei Rohren mit glattzylindrischen Enden**
Device for sealed connection of two pipes with smooth cylindrical ends
Dispositif pour le raccordement étanche de deux conduits avec embouts lisses cylindriques

(30) Priorität: 03.11.1984 DE 3440258
(43) Veröffentlichungstag der Anmeldung: 14.05.1986
(73) Patentinhaber: MERO-Werke Dr.-Ing. Max Mengeringhausen GmbH & Co., D-97082 Würzburg (DE)
(72) Erfinder: Klingelhöfer, Ulrich, D-8702 Waldbüttelbrunn (DE)
(74) Vertreter: Böck, Bernhard

(56) Entgegenhaltungen:
- CH-A- 432 956
- DE-A- 2 059 311
- DE-A- 2 744 739
- DE-C- 925 743
- DE-C- 3 122 708
- DE-C- 3 404 739
- DE-U- 1 997 157
- DE-U- 7 316 306
- DE-U- 8 107 112
- GB-A- 880 847

## Beschreibung

Die Erfindung bezieht sich auf eine Vorrichtung zur abgedichteten Verbindung von zwei Rohren mit glattzylindrischen Enden, mit einer durch ein Schellenband kontraktierbaren Dichtmanschette, die an ihrem Innenumfang einen mittig angeordneten, radial nach innen ragenden, ringförmigen Steg als Anschlag für die einzusteckenden Rohr-Stirnenden und an ihren Außenrandbereichen ringförmige Dichtlippen aufweist die derart geformt sind, daß sie sich beim Einstecken des Rohres nach innen umbiegen, wobei sich von beiden Seiten des mittigen Stegs axial nach außen jeweils ein radial nach außen abgeschrägter Innenwand-Abschnitt erstreckt.

Bei einer bekannten Vorrichtung der obigen Bauart (CH-A-432956) erfolgt die Abdichtung der eingesteckten Rohre ausschließlich durch die ringförmigen Dichtlippen, was sich in der Praxis als nachteilig herausstellt. Außerdem besteht bei dieser bekannten Vorrichtung die Gefahr, daß beim Spannen des Schellenbandes durch die relativ stark nach außen abgeschrägten Innenwand-Abschnitte der Dichtmanschette auf die Rohr-Stirnenden eine axial nach außen gerichtete Schubkraft ausgeübt wird, was sich vor allem bei relativ schmalen Dichtmanschetten als äußerst nachteilig auswirkt. Die durch die kontraktierte Dichtmanschette auf die beiden Rohrenden ausgeübten Haltekräfte können dann nämlich ungenügend werden.

Durch die DE-A-2 744 739 ist ferner eine Rohrkupplung mit einer zylindrischen Muffe aus glasfaserarmierten Kunststoff oder Metall bekannt, die mit einem Gummidichtungselement ausgekleidet ist. Dieses Gummidichtungselement weist einen radial nach innen ragenden, ringförmigen Steg als Anschlag für die einzusteckenden Rohr-Stirnenden auf, an dessen beiden radialen Seiten sich zunächst relativ stark nach außen abgeschrägte Innenwand-Abschnitte und dann weniger stark abgeschrägte Innenwand-Abschnitte anschließen, die jeweils einen Neigungswinkel mit der Längsachse der Vorrichtung von weniger als 20° einschließen. An diesen Innenwand-Abschnitte grenzen wiederum zylindrische Innenwand-Abschnitte an, welchen nach außen ringförmige Dichtlippen folgen. Diese bekannte Rohrkupplung bildet lediglich ein Einschubelement für die zu verbindenden Rohre, denn die Muffe aus glasfaserarmiertem Kunststoff oder Metall ist nicht kontraktierbar.

Aus der DE-C-925 743 ist noch eine kontraktierbare Muffe bekannt, die in der Mitte einen Steg, an den beiden Enden Wülste und im Bereich der beiden zu verbindenen Rohre umlaufende Ringräume aufweist. Die Begrenzungslinie der Ringräume steigt von der Mitte der Muffe leicht schräg an, um dann in einem Bogen senkrecht zum Einsteckrohr zurückzukehren.

Der Erfindung liegt die Aufgabe zugrunde, eine Vorrichtung mit einer durch ein Schellenband kontraktierbaren Dichtmanschette zur abgedichteten Verbindung von zwei Rohren mit glattzylindrischen Enden zu schaffen, welche die Ausbildung zusätzlicher Dichtbereiche ermöglicht und beim Einstecken der zu verbindenden Rohre in die Vorrichtung deren Führung verbessert.

Obige Aufgabe wird erfindungsgemäß dadurch gelöst, daß die radial nach außen abgeschrägten Innenwand-Abschnitte unmittelbar von den Ecken an beiden radialen Seiten des mittigen Stegs weg jeweils einen Neigungswinkel mit der (verlängerten) Längsachse der Vorrichtung von höchstens 20° einschließen und im entspannten Zustand der Dichtmanschette Führungen für die Rohrenden bilden, und daß bei kontraktierter Dichtmanschette diese Innenwand-Abschnitte gegen den Außenumfang der Rohre neben deren Stirnenden gepreßt sind und zwei zusätzliche ringförmige Dichtbereiche mit relativ großer axialer Länge neben jeden Seite des mittigen Stegs bilden. Bei kontraktierter Dichtmanschette werden dadurch vorteilhaft die eingesteckten Rohrenden nicht nur im Bereich der Dichtlippen, sondern zusätzlich auch zu beiden radialen Seiten des mittigen Stegs durch die angepreßten Innenwand-Abschnitte mit relativ großer axialer Lange abgedichtet, wodurch zugleich auch die Halterung der eingesteckten Rohrenden in der Dichtmanschette in axialer Richtung gegenüber dem Stand der Technik beträchtlich verbessert wird. Vorteilhaft kann man dadurch auch die Breite der Dichtmanschette reduzieren, was wiederum aufgrund der Materialeinsparung zu einer wirtschaftlichen Lösung führt. Besonders zu erwähnen ist, daß diese beiden zusätzlichen Dichtbereiche unabhängig von den Dichtlippen wirksam sind. Die Dichtfunktion dieser zusätzlichen Dichtbereich bleibt auch dann erhalten, wenn die Rohr-Stirnenden nicht einwandfrei senkrecht zur Rohrachse ausgebildet sind, sondern schräg zu dieser verlaufen. Schließlich ist durch die geringfügige Neigung der beiden Innenwand-Abschnitte zu beiden radialen Seiten des mittigen Stegs gewährleistet, daß diese bei der Kontraktierung der Dichtmanschette keine nach außen gerichtete Schubkraft auf die Rohrenden ausüben können, wie dies bei dem eingangs erläuterten Stand der Technik der Fall ist. Ein anderer Vorteil der Erfindung besteht darin, daß die Rohrenden beim Einstecken in die Dichtmanschette durch die schwach abgeschrägten Innenwand-Abschnitte gut geführt werden. Dabei ist es zweckmäßig, wenn im entspannten Zustand der Dichtmanschette die Rohr-Stirnenden jeweils in der Ecke zwischen dem Steg und dem abgeschrägten Innenwandabschnitt oder etwas radial von dieser Ecke nach innen versetzt zum Liegen kommen. Mögliche Maß-Toleranzen bei dem zu verbindenden Rohren können einfach durch stärkeres Verspannen des Schellenbandes ausgeglichen werden.

Versuche haben ergeben, daß der bevorzugte Neigungswinkel der Innenwandabschnitte gegenüber der (verlängerten) Längsachse 15° ± 1° beträgt.

Wenn nach einer weiteren Ausgestaltung der Erfindung sich die radial nach außen abgeschrägten Innenwandabschnitte vom mittigen Steg bis jeweils zur innersten Dichtlippe erstrecken, besteht vorteilhaft die Möglichkeit, die axiale Länge der zusätzlichen ringförmigen Dichtbereiche durch entsprechende stärkere Kontraktierung der Dichtmanschette zu vergrößern.

Die Erfindung wird anschließend anhand der Zeichnungen eines Ausführungsbeispiels näher erläutert. Es zeigen:
Fig. 1 eine Schnittansicht einer Dichtmanschette gemäß der Erfindung und
Fig. 2 eine Teil-Schnittansicht der in Fig. 1 gezeigten, mittels eines Schellenbandes kontraktierten Dichtmanschette in Verbindung mit den glattzylindrischen Enden zweier Rohre.

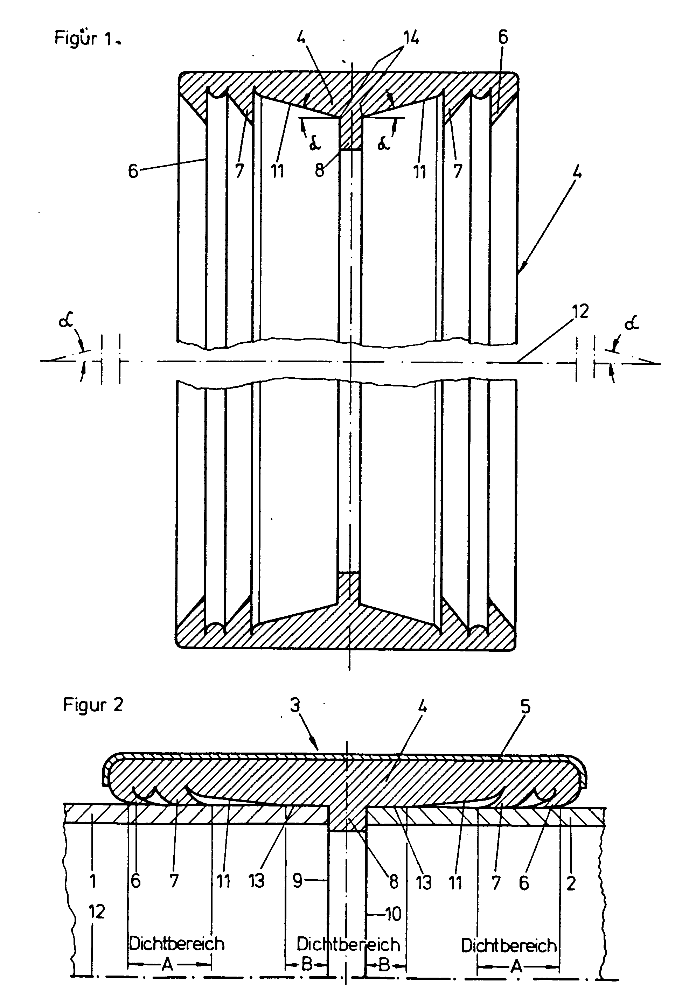

Mit 1 und 2 sind in Fig. 2 die glattzylindrischen Enden zweier abgedichtet zu verbindender Rohre mit gleichem Außen- und Innendurchmesser bezeichnet. Bei diesen Rohren 1, 2 kann es sich um Abwasserrohre aus Stahl oder Gußeisen handeln. Zur abgedichteten Verbindung dieser beiden Rohre 1, 2 dient die Vorrichtung 3, welche eine Dichtmanschette 4 aus elastomerem Material sowie ein Schellenband 5 aufweist, welches zum Verspannen der Dichtmanschette 4 dient.

Das Schellenband 5 aus vorzugsweise dünnwandigem Edelstahlblech ist zu diesem Zweck mit zwei radial nach außen abstehenden Abkantungen versehen, welche mittels Schrauben in bekannter Weise gegeneinander gezogen werden können, um den Innendurchmesser des Schellenbandes zu verkleinern. Diese Teile des Schellenbandes 5 sind, da bekannt, nicht gezeigt.

Die von dem Schellenband 5 umfaßte Dichtmanschette 4 weist an ihren innenliegenden beiden Außenrandbereichen jeweils zwei ringförmige Dichtlippen 6, 7 und einen mittig angeordneten, radial nach innen ragenden, ringförmigen Steg 8 auf, welcher als Anschlag für die beiden einzusteckenden Rohr-Stirnenden 9, 10 dient. Zwischen jeder Seite des Stegs 8 und jeder innersten Dichtlippe 7 erstreckt sich ein radial nach außen abgeschrägter Innenwandabschnitt 11. Der Neigungswinkel α dieser Innenwandabschnitte 11 gegenüber der verlängerten Längsachse 12 der Vorrichtung 3 beträgt beim Ausführungsbeispiel 15° ± 1°.

Beim Einstecken der glattzylindrischen Rohrenden 1, 2 in die Vorrichtung 3 bzw. Dichtmanschette 4 werden die Dichtlippen 6, 7 nach innen umgebogen und die schrägen Innenwandabschnitte 11 dienen als Führung für die Rohrenden, bis die Rohr-Stirnenden 9, 10 an dem ringförmigen Steg 8 anschlagen. Die Dichtmanschette 4 ist unter Berücksichtigung der schwankenden Außendurchmesser der Rohre 1, 2 so bemessen, daß die Rohr-Stirnenden 9, 10 entweder unmittelbar in den Ecken 14 (Fig. 1) oder etwas radial nach innen versetzt von diesen Ecken 14 zu liegen kommt. Es versteht sich, daß die Dichtmanschette 4 in dieser Montagephase sich im entspannten Zustand befindet. Zur Herstellung der abgedichteten Rohrverbindung wird das Schellenband 5 mittels der nicht gezeigten Schrauben in Umfangsrichtung zusammengezogen und dadurch die Dichtmanschette 4 radial nach innen vorgespannt. Dabei werden die Dichtlippen 6, 7 gegen den Außenumfang der Rohre 1, 2 gepreßt, wodurch zwei erste Dichtbereiche (A) (Fig. 2) erzeugt werden. Aufgrund des flachen Neigungswinkels a der Innenwandabschnitte 11 wird zusätzlich eine ringförmige Zone 13 dieser Innenwandabschnitte 11 gegen den Außenumfang der Rohre 1, 2 neben deren Stirnenden 9, 10 gepreßt, wodurch zwei zweite ringförmige Dichtbereiche B neben jeder Seite des mittigen Stegs 8 geschaffen werden. Die axiale Lange dieser Dichtbereiche B hängt auch von dem Grad der Vorspannung der Dichtmanschette 4 ab und kann daher in gewissen Grenzen eingestellt werden.

## Patentansprüche

1. Vorrichtung zur abgedichteten Verbindung von zwei Rohren (1, 2) mit glattzylindrischen Enden, mit einer durch ein Schellenband (5) kontraktierbaren Dichtmanschette (4), die an ihrem Innenumfang einen mittig angeordneten, radial nach innen ragenden; ringförmigen Steg (8) als Anschlag für die einzusteckenden Rohr-Stirnenden und an ihren Außenrandbereichen ringförmige Dichtlippen (6, 7) aufweist, die derart geformt sind, daß sie sich beim Einstecken des Rohres nach innen umbiegen, wobei sich von beiden Seiten des mittigen Stegs (8) axial nach außen jeweils ein radial nach außen abgeschrägter InnenwandAbschnitt (11) erstreckt,
dadurch **gekennzeichnet,**
daß die radial nach außen abgeschrägten Innenwand-Abschnitte (11) unmittelbar von den Ecken (14) an beiden radialen Seiten des mittigen Stegs (8) weg jeweils einen Neigungswinkel (a) mit der (verlängerten) Längsachse (12) der Vorrichtung (3) von höchstens 20° einschließen und im entspannten Zustand der Dichtmanschette (4) Führungen für die Rohrenden bilden, und daß bei kontraktierter Dichtmanschette (4) diese Innenwand-Abschnitte (11) gegen den Außenumfang der Rohre (1, 2) neben deren Stirnenden (9, 10) gepreßt sind und zwei zusätzliche ringförmige Dichtbereiche (B) mit relativ großer axialer Länge neben jeder Seite des mittigen Stegs (8) bilden.

2. Vorrichtung nach Anspruch 1, dadurch gekennzeichnet, daß der Neigungswinkel (α) der Irtnenwandabschnitte (11) gegenüber der (verlängerten) Längsachse (12) 15° ± 1° beträgt.

3. Vorrichtung nach Anspruch 1 oder 2, dadurch gekennzeichnet, daß sich die radial nach außen abgeschrägten Innenwandabschnitte (11) vom mittigen Steg (8) bis jeweils zur innersten Dichtlippe (7) erstrecken.

## Claims

1. Device for sealed coupling of two pipes (1, 2) with smooth cylindrical ends, with a sealing sleeve (4) adapted to be contracted by a clip (5), which sleeve comprises on its inner periphery a centrally arranged annular web (8) projecting radially inwardly as an abutment for the ends of the pipes to be inserted and at its outer edge regions annular sealing lips (6, 7) shaped such that they are bending inwardly when the pipe is inserted, wherein there extends axially outwards on each side of the central web (8) a respective inner wall section (11) inclined radially outwards,
characterized in
that the radially outwardly inclined inner wall sections (11) extend directly from the corners (14) on the two radial sides of the central web (8) including in each case an angle of inclination (α) with the (extended) longitudinal axis (12) of the device (3) of at most 20° and form guides for the pipe ends in the relaxed state of the sealing sleeve (4), and in that, with the sleeve (4) contracted, these inner wall sections (11) are pressed against the outer periphery of the pipes (1, 2) near their ends (9, 10) and form two additional annular sealing regions (B) comprising a relatively large axial length adjacent each side of the central web (8).

2. Device according to claim 1, characterized in that the angle of inclination (a) of the inner wall sections (11) amounts to 15° ± 1° relative to the (extended) longitudinal axis (12).

3. Device according to claim 1 or 2, characterized in that the radially outwardly inclined inner wall sections (11) extend from the central web (8) in each case up to the innermost sealing lip (7).

## Revendications

1. Dispositif pour le raccordement étanche de deux tubes (1, 2) à extrémités cylindriques lisses, comportant une manchette d'étanchéité (4) qu'un collier de serrage (5) peut contracter et qui présente à sa périphérie intérieure, servant de butée pour les extrémités frontales à emboîter, une nervure annulaire centrale (8) faisant radialement saillie vers l'intérieur et, sur ses zones marginales extrèmes, des lèvres annulaires d'étanchéité (6, 7), qui sont formées de facon qu'elles sont deformée vers l'intérieur quand le tube est emboîté, une partie de paroi interne (11) oblique radialement vers l'extérieur, s'étendant axialement vers l'extérieur de part et d'autre de la nervure centrale (8),
charactérisé en ce que
les parties de paroi interne (11) obliques radialement vers l'extérieur forment directement à partir des coins (14) aux deux côtés radiaux de la nervure centrale (8) un angle d'inclinaison respectif (α) avec l'axe longitudinal (prolongé) (12) du dispositif (3) de 20° au maximum et constituent des guides pour les extrémités des tubes lorsque la manchette d'étanchéité (4) est à l'état détendu, et en ce que, lorsque la manchette d'étanchéité (4) est contractée, ces parties de paroi interne (11) sont comprimées contre la périphérie extérieure des tubes (1, 2) à côté de leurs extrémités frontales (9, 10), et constituent deux autres zones annulaires d'étanchéité (B) avec une longeur axiale relativement grand de chaque côté de la nervure centrale (8).

2. Dispositif selon la revendication 1, caractérisé en ce que l'angle d'inclinaison (α) des parties de paroi interne (11) par rapport à l'axe longitudinal (12) (prolongé) est égal à 15° ± 1°.

3. Dispositif selon la revendication 1 ou 2, caractérisé en ce que les parties de paroi interne (11) obliques radialement vers l'extérieur s'étendent depuis la nervure centrale (8) jusqu'à chaque lèvre d'étanchéité (7) le plus à l'intérieur.
